# EUROPEAN PATENT APPLICATION

(11) **EP 2 642 640 A1**
(43) Date of publication of application: **25.09.2013**
(21) Application number: 12160387.2
(22) Date of filing: 20.03.2012
(51) Int. Cl.: H02K 9/08

(54) **Electric machine**

(71) Applicant: Alstom Technology Ltd, 5400 Baden (CH)
(72) Inventor: Hediger, Daniel, 5504 Othmarsingen (CH); Hennel, Hyanzinth, 5610 Wohlen (CH)

(57) **Abstract**

The electric machine (1) has a stator (3), a rotor (4), an air gap (12) between the stator (3) and rotor (4), and seals (15) for the air gap (12). The seals (15) are directly connected to the stator (3).

## Description

### TECHNICAL FIELD

The present disclosure relates to an electric machine such as for example an electric generator or an electric motor. In particular the disclosure refers to the sealing of an air gap between the stator and rotor of the electric machine.

### BACKGROUND

Rotating electric machines have a stator and a rotor; an air gap is defined between the stator and the rotor.

The stator is housed in a casing where a cooling gas (such as air, hydrogen, argon, etc) circulates.

The cooling schemes are typically different for different electric machines, but usually they provide for cooling channels within the stator and rotor, such that the cooling gas passes through the stator channels, then through the air gap, and thus through the rotor channels or vice versa.

In order to prevent the cooling gas from directly entering the air gap from the sides of the stator and rotor, baffles are connected to the stator and the supports of the end windings and seals are connected to the baffles.

This structure is complicate and troubling in case of maintenance that requires for example rotor extraction, because in order to extract the rotor, the baffles must be removed first.

### SUMMARY

An aspect of the disclosure includes providing an electric machine that has a simpler structure than existing electric machines.

Another aspect of the disclosure includes providing an electric machine for which extraction of the rotor from the stator is faster and easier than in existing electric machines.

These and further aspects are attained by providing an electric machine in accordance with the accompanying claims.

### BRIEF DESCRIPTION OF THE DRAWINGS

Further characteristics and advantages will be more apparent from the description of a preferred but non-exclusive embodiment of the electric machine, illustrated by way of non-limiting example in the accompanying drawings, in which:

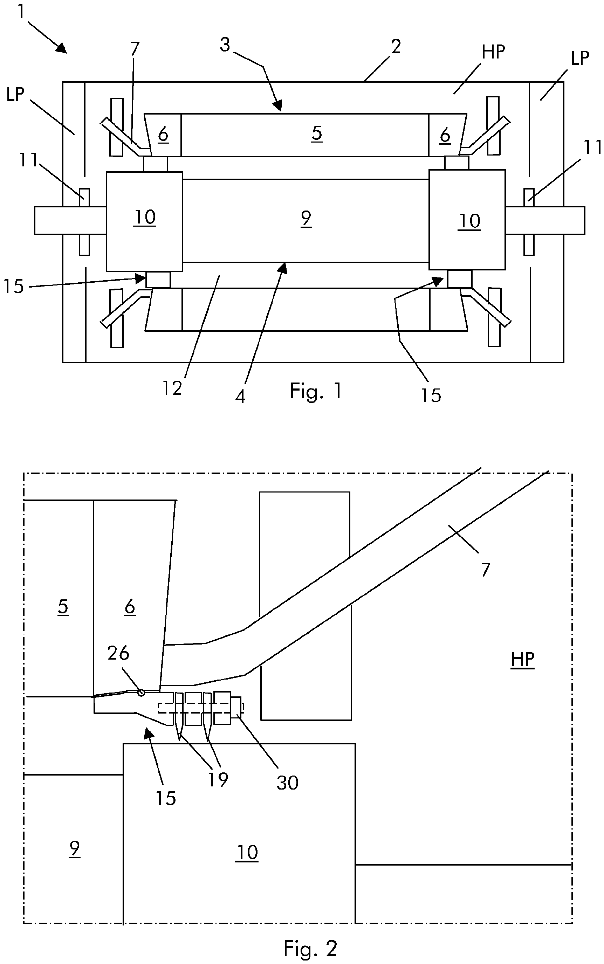

Figure 1 is a schematic view of an embodiment of the electric machine;
Figure 2 is an enlarged view of a part of figure 1;

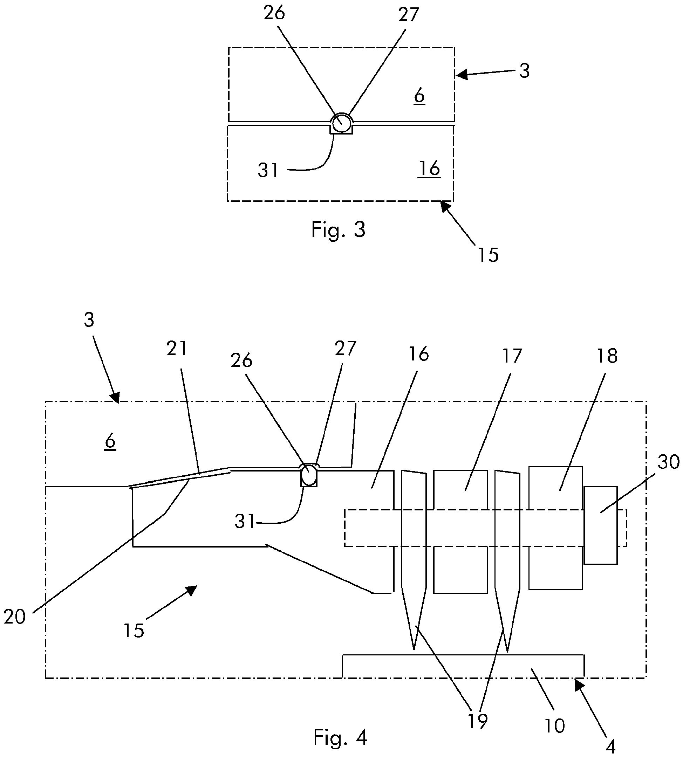

Figure 3 is an enlarged view of a part of figure 2;

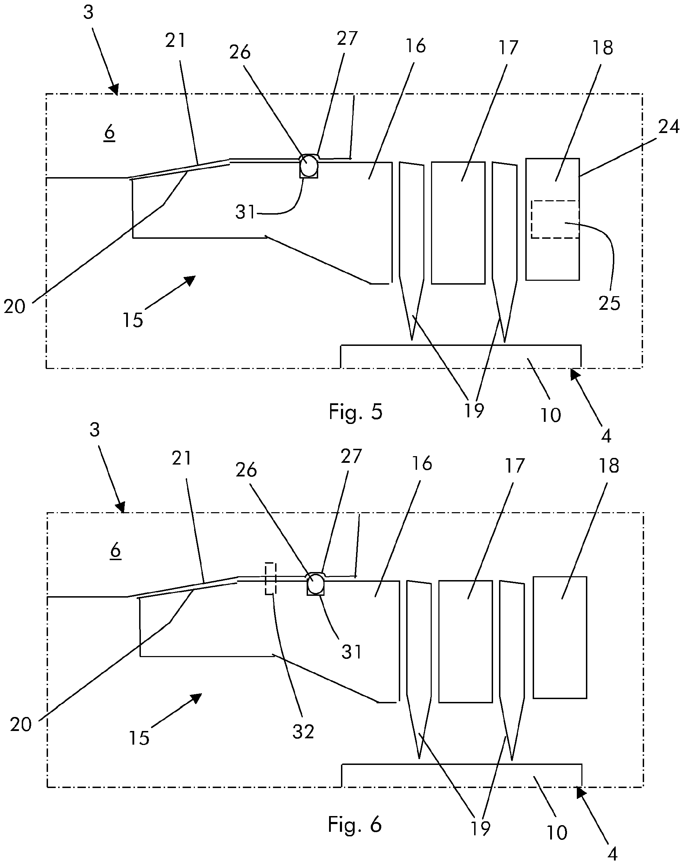

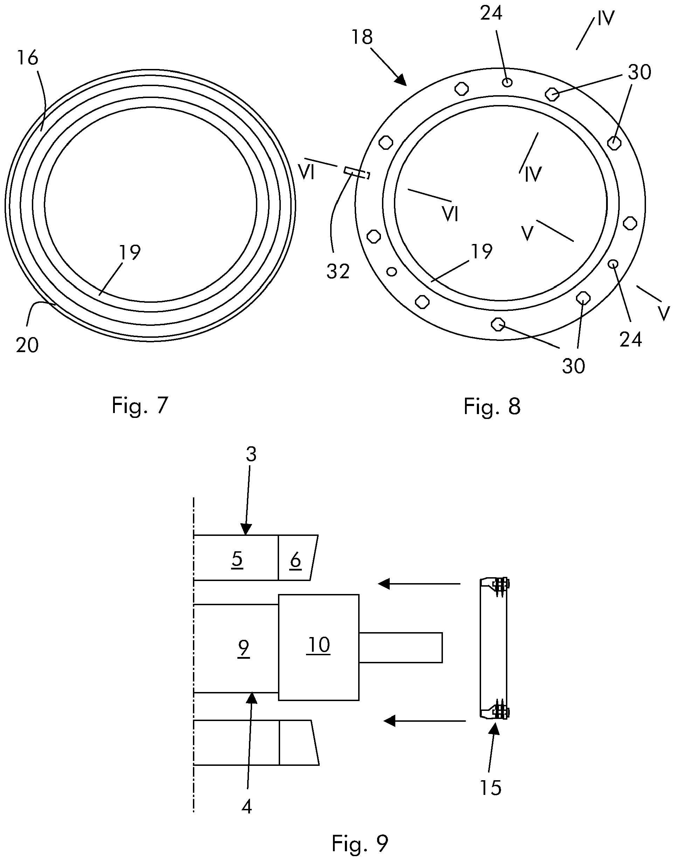

Figures 4 through 6 show a cross section of a seal along lines IV-IV, V-V and VI-VI of figure 8;
Figures 7 and 8 show a front view and a rear view of the seal; and
Figure 9 shows the assembling of the seal on the electric machine.

### DETAILED DESCRIPTION OF EXEMPLARY EMBODIMENTS

The electric machine 1 is a rotating electric machine such as a synchronous electric generator (for example a turbogenerator, i.e. a synchronous electric generator to be connected to a gas turbine and/or a steam turbine, or a hydro generator, i.e. a synchronous electric generator to be connected to a hydro turbine) and asynchronous electric generator, a synchronous or asynchronous electric motor, etc..

The electric machine 1 has a casing 2 that houses a stator 3 and a rotor 4 and contains a gas such as air, hydrogen, argon, etc; this gas is also the cooling gas for the electric machine.

The stator 3 includes a stator core 5 and press plates 6 at the opposite ends thereof and is provided with slots that house stator bars; in the figure the end windings 7 of the stator bars that penetrate the stator 3 are shown.

Likewise the rotor has an active part 9 with slots that house rotor windings and retaining rings 10 that support the end windings of the rotor windings against centrifugal forces.

The casing 2 defines low pressure zones LP and a high pressure zone HP (that houses the active part 9 and stator core 5); fans 11 are provided between them to help cooling gas circulation.

Between the stator 3 and rotor 4, an air gap 12 is defined and a seal 15 for the air gap 12 is provided.

The seal 15 is directly connected to the stator 3 (for example to the press plate 6) and is preferably positioned between the stator 3 and rotor 4.

The seal 15 has an annular shape.

For example the annular shaped seal 15 includes a plurality of rings 16, 17, 18 and sealing elements 19 facing the rotor 4 (in particular the retaining ring 10 of the rotor 4) between adjacent rings 16-17 and 17-18.

The figures show two sealing elements 19 with a substantial triangular cross section, it is anyhow clear that the number of the sealing elements 19 can be any (i.e. also only one or more than two according to the needs) and the shape can also be any (for example rectangular, circular, T, I, etc).

Fixing elements 30 such as screws, bolts, etc, are provided for connecting the rings 16, 17, 18 and sealing elements together.

In a preferred embodiment, an end of the seal 15 has a stop part 20 arranged to rest on a corresponding stop part 21 of the stator 3.

The stop parts 21 of the stator 3 are preferably provided at the press plate 6. Several different shapes are possible for the stop parts 21 in addition to the one shown.

Another end 24 of the seal 15 has a seat 25 for connecting an insertion/extraction tool for the seal 15. This seat 25 can be threaded or can have other means to help driving of the seal 15.

In addition, the seal 15 has an o-ring 26 (housed in a seat 31 of the ring 16) connected to the stator 3; this O-ring 26 is a sealing element and in addition it prevents extraction of the seal 15 from the air gap 12. Likewise, the stator 3 (in particular the press plates 6) has a seat 27 (a circumferential seat is shown in the drawings) for housing the o-ring 26.

In addition, one or more pins 32 can also be provided extending from the seal 15 (for example from the ring 16) and inserted into slots of the stator (for example the pins 32 can be inserted into the wedges that close the slots that house the stator bars); these pins 32 prevent rotation of the seal 15. The pins 32 can be partly housed in a blind hole of the ring 16; other examples are anyhow possible.

The operation of the electric machine is apparent from that described and illustrated and is substantially the following.

When the electric machine is assembled, in order to connect the seal 15:
the seal 15 is assembled, i.e. the rings 16-18 with the sealing elements 19 and the o-ring 26 are assembled with the fixing elements 30, to define the seal 15 with the annular shape;
then the seal 15 is slipped over the retaining rings 10 and connected to the press plates 6 of the stator 3 by inserting the o-ring 26 into the seat 27.

Disassembling is also very easy and fast, because the seal 15 must simply be extracted from its position.

Naturally the features described may be independently provided from one another.

In practice the materials used and the dimensions can be chosen according to the requirements and to the state of the art.

### REFERENCE NUMBERS

- 1: electric machine
- 2: casing
- 3: stator
- 4: rotor
- 5: stator core
- 6: press plate
- 7: end windings
- 9: active part
- 10: retaining ring
- 11: fan
- 12: air gap
- 15: seal
- 16: ring
- 17: ring
- 18: ring
- 19: sealing element
- 20: stop part
- 21: stop part
- 24: end of 15
- 25: seat
- 26: o-ring
- 27: seat
- 30: fixing element
- 31: seat
- 32: pin
- LP: low pressure zone
- HP: high pressure zone

## Claims

1. An electric machine (1) with a stator (3), a rotor (4), an air gap (12) between the stator (3) and rotor (4), and at least a seal (15) for the air gap (12), **characterised in that** the at least a seal (15) is directly connected to the stator (3).

2. The electric machine (1) according to claim 1, **characterised in that** the at least a seal (15) is positioned between the stator (3) and rotor (4).

3. The electric machine (1) according to claim 1, **characterised in that** the at least a seal (15) has an annular shape.

4. The electric machine (1) according to claim 3, **characterised in that** the at least an annular shaped seal (15) includes a plurality of rings (16, 17, 18), at least a sealing element (19) facing the rotor (4) being provided between adjacent rings (16, 17, 18).

5. The electric machine (1) according to claim 1, **characterised in that** an end of the seal (15) has a stop part (20) arranged to rest on a corresponding stop part (21) of the stator (3).

6. The electric machine (1) according to claim 5, **characterised in that** the stator (3) has a stator core (5) and press plates (6) at the opposite ends thereof, wherein at least a stop part (21) of the stator (3) is provided at a press plate (6).

7. The electric machine (1) according to claim 1, **characterised in that** another end (24) of the seal (15) has a seat (25) for connecting an insertion/extraction tool for the seal (15).

8. The electric machine (1) according to claim 1, **characterised in that** the seal (15) has at least an o-ring (26) connected to the stator (3).

9. The electric machine (1) according to claim 8, **characterised in that** the stator (3) has a seat (27) for housing the o-ring (26).

10. The electric machine (1) according to claim 1, **characterised in that** at least a pin (32) is provided extending from the seal (15) and inserted into a slot of the stator.

11. The electric machine (1) according to claim 1, **characterised in that** the at least a seal (15) is directly connected to the press plate (6).
